# EUROPEAN PATENT APPLICATION

(11) **EP 2 659 960 A1**
(43) Date of publication of application: **06.11.2013**
(21) Application number: 12382163.9
(22) Date of filing: 03.05.2012
(51) Int. Cl.: B01J 19/00, C01B 3/38, C10G 2/00

(54) **Gas-to-liquid proccesing system in microreactors**

(71) Applicant: Global-Synergy Consultancy Services S.L., 01013 Vitoria - Alava (ES)
(72) Inventor: Olabarrieta Quintana, Miren, 01013 Vitoria - Alava (ES); Echave Lozano, Francisco Javier, 01013 Vitoria - Alava (ES); Caubilla Ángulo, Juan Manuel, 01013 Vitoria - Alava (ES); Ruiz De Ángulo Gabilondo, Juan, 01013 Vitoria - Alava (ES)
(74) Representative: ABG Patentes, S.L.

(57) **Abstract**

The present invention relates to a Gas-to-Liquid processing system suitable for converting associated and non-associated natural gas into synthetic fuel, wherein said system comprises a reforming module and a Fischer-Tropsch module, characterized in that each of said modules are placed in a vessel, and further characterized in that the microreactors and the heat exchangers of the system are micro-channel based devices.

## Description

### FIELD OF THE INVENTION

The present invention is comprised within the devices which convert associated/non-associated natural gas into synthetic fuel by using a micro-channel based technology.

### BACKGROUND

Gas-To-Liquid (GTL) technology, in development for nearly a century, provides an alternative to traditional crude oil refining. GTL process involves the conversion of natural gas (NG) into high quality liquid synthetic fuels in two stages: syngas production by steam reforming, partial oxidation or a combination of both, and production of long-chain liquid hydrocarbons (such as waxes, naphta and diesel) by the Fischer-Tropsch synthesis (FT).

Renewed interest in GTL technology is mainly driven by the steady increase in global energy demand together with the existence of large volumes of stranded natural gas in remote areas (GTL is the main alternative to liquefied NG for monetizing these reserves). However conventional GTL technology has two significant limitations: the investment costs are very high making it profitable only when exploiting very large gas fields and it is only viable for onshore applications.

The first drawback, related to high investment costs, is mainly due to the fact that the two GTL stages operate most effectively at different pressures (lower pressures (5-25 atm) for the reforming stage and higher pressures (10-50 atm) for the FT synthesis). To perform both stages under the right conditions, it is necessary the use of compressing devices suitable for applying higher pressures to the gas exiting the reforming stage, which has a high content of hydrogen. These compressing systems usually require high electrical demand as well as very demanding safety specifications in order to avoid hydrogen leaks and explosions. Rising the pressure between the reforming and the FT stages is, therefore, considerably expensive and uses large amounts of energy, increasing the economy of all the process.

In addition, conventional GTL plants are typically designed for onshore application and to enable the economic exploitation of large capacity gas fields (25000 barrels per day). Such plants require large plot areas and have a considerable weight (generally these plants convert natural gas using fixed bed reactors).

To overcome these limitations, GTL systems based on micro-channel technology are under development as a very advantageous alternative over the conventional systems, reducing the plant's size and weight to achieve higher compactness and efficiency and to reduce global costs.

Micro-channel technology is based on compact reactor's block containing thousands of thin channels (hydraulic diameters ≤ 1 mm), which are interleaved with water-filled coolant channels. The small diameter channels allows higher mass and heat transfer ratios than conventional fixed bed reactors. In addition, micro-channel technology eliminates hot/cold spots allowing an extremely accurate temperature control and isothermal operating conditions. In addition, a higher compactness and therefore, better portability and integration of the processes are achieved with micro-channel technology in comparison to the traditional equipment. Another important advantage of micro-channel technology is related to the high free volume fraction presented on these systems, allowing the easy elimination of reactor waxes in a continuous reaction regime. All in all, micro-channel technology enhances productivity, improve product selectivity and safety and minimize costs and size. Therefore, they are suitable for gas associated to relatively small oil fields situated in remote or deepwater areas and can be adapted to onshore, offshore (platforms) and mobile/onboard (tankers) applications.

There are a number of documents in the state of the art which describe GTL systems devices capable of producing synthetic fuel based on microchannel technology, such as W02008/097785 A1 and W02009/126769 A2 (both from Velocys Inc.). Said processes generally comprise gasifying the natural gas to syngas at elevated temperatures, and flowing such syngas into FT microchannel reactors in the absence or presence of catalysts to convert the syngas into the desired products.

Currently, the preferred technology for the gasifying of natural gas is the autothermal reforming (ATR) of methane, in which suitably pretreated natural gas is mixed with steam and pure oxygen, fed first to a combustor and then flown through a bed of catalyst where the steam- and CO₂-reforming reactions take place. This is an energetically efficient process that allows obtaining, under proper operation, syngas with H₂/CO ratio close to two which is the optimum composition for the FT synthesis. As a matter of fact, the companies leading the application of microreactor technology to GTL have adopted methane steam reforming (SMR) as the method for syngas production. A new generation of syngas apparatus has been developed also to further improve the SMR procees by using Ion Transfer Membranes (ITMs), non-porous ceramic membranes, that allows the simultaneous diffusion of oxygen ions and electrons (W02009/044198). In these devices, an oxygen ion from an oxygen-containing gas stream (oxygen from air) diffuses into a methane-containing gas stream.

However, there are problems with processes that have been proposed combining SMR and FT reactions for converting natural gas to higher molecular weight hydrocarbons. These include the production of high levels of emissions, the requirement for high levels of water consumption, the production of large amounts of waste water, and process inefficiencies. The process inefficiencies tend to create limits in the amounts of carbon in the final Fischer-Tropsch product as compared to the amount of carbon in the natural gas feed. In order to reduce the production of high levels of emissions, GTL Mycrosystems AG (W02005/090521 A1) developed a GTL process using mycrochannel technology wherein the tail gas obtained as result of the process is used to generate electricity not only for operating the process, such as compressing the gases to a suitable pressure for the FT synthesis, but also to provide excess electricity for other purposes. However, the operating temperature of this system is higher than would conventially be appropriate (≥230°C), and the reaction kinetics increase rapidaly with the temperature, so it is necessary to operate at a high space velocity (≥10000 h⁻¹) to restrict the high production of water and the associated risk of damaging the catalyst.

W02008/089376 A2 (Velocys Inc.) describes a GTL process using mycrochannel technology wherein the tail gas and water process obtained as a result of the FT synthesis is recycled by combining it with the natural gas feed for the SMR step. In addition, the system includes up to five consecutive FT reactors in order to increase the efficiency of the total process (up to 65% of CO conversion). EP2010453 B1 (Compact GTL PLC) describes a GTL microchannel process that employes oxygenates extracted from the water generated during the FT reaction stage to provide heat for SMR step.

However, most of the GTL microchannel processing systems described in the state of the art are still not energetically and product effecient due to the design and arrangement of the different components. Therefore, it is still necessary for said GTL microchannel processing systems to incorporate compact and integrable as well as safe components or microreactors which allow maximally reducing the energy investment while improving the efficieny/selectivity of the process.

### BRIEF DESCRIPTION OF THE INVENTION

The authors of the present invention have developed a GTL processing system based on micro-channel devices that allows a better integration between the reforming and the Fischer-Tropsch modules reducing the plant's size and weight. It also achieves higher compactness and efficiency and reduces global costs.

An additional advantage of the GTL processing system of the invention is that the energy efficiency is optimized in the entire process, since the heat released in some stages of the process is recovered, it being used in other stages where the heat supply is necessary. Therefore, the heat is exchanged directly between the fluids of the process themselves. The GTL processing system is therefore thermally self-sufficient, producing the vapor necessary for the process and self-managing its condensates.

Thus, in a first aspect the present invention is aimed at a Gas-to-liquid processing system suitable for converting associated and non-associated natural gas into synthetic fuel, comprising:
a) a reforming module comprising:
   - at least an autothermal modified reforming microreactor wherein methane is catalytically converted into hydrogen and carbon monoxide by a steam reforming reaction and a partial oxidation reaction;
   - at least a catalytic combustion microreactor which provides the thermal energy required by the autothermal modified reforming microreactor, or alternatively, acts as a heat exchanger;
   - at least a first heat exchanger located at the inlet of the autothermal modified reforming microreactor, which allows pre-heating the natural gas to a temperature suitable to be treated in the autothermal modified reforming microreactor; and
   - at least a second heat exchanger provided with open channels, wherein said second heat exchanger is located at the outlet of the autothermal modified reforming microreactor,
b) a Fischer-Tropsch module comprising:
   - at least a Fischer-Tropsch microreactor wherein hydrogen and carbon monoxide react to generate hydrocarbons;
   - at least a heat exchanger located in the inlet of the first Fischer-Tropsch microreactor, which allows pre-heating the mixture of hydrogen and carbon monoxide obtained in the reforming module to a temperature suitable to be treated in the Fischer-Tropsch microreactor;
**characterized in that** the reforming module and the Fischer-Tropsch module are laid out separately, and each of these modules are located in a vessel; and further **characterized in that** the microreactors and the heat exchangers of the system are micro-channel based devices.

In a second aspect, the present invention is aimed at a process to convert associated and non-associated natural gas into synthetic fuel, comprising:
a) a steam reforming reaction and a partial oxidation reaction, wherein methane is catalytically converted into hydrogen and carbon monoxide,
   wherein both the steam reforming and the partial oxidation reactions are conducted together; and
b) a Fischer-Tropsch synthesis wherein the hydrogen and carbon monoxide react to generate a fuel stream; **characterized in that** said stages are carried out using the GTL processing system as defined above, and wherein the reforming module and the Fischer-Tropsch module operate at the same pressure.

The GTL processing system object of the present invention is designed to carry out the convertion of associated and non-associated natural gas into synthetic fuel more effectively and economically.

The particular design of this system favors:
- a better heat and mass transference under isothermal conditions since both reforming and FT modules are based on micro-channel technology, laid out separately in vessels and includes at least a heat exchanger with open channels.
- a more economical and safer integration between the reforming and the FT modules by operating the whole system at constant pressure since no compression devices are incorporated in between both stages,
- a more efficient reforming stage since both steam reforming and partial oxidation reactions are combined in adjacent microchannels, and both reforming and combustion reactions take place in the same reactor's block,
- an optimal H₂/CO ratio improving the efficiency and selectivity of the FT process,
- neutral balance of water since the water produced in the process is condensed through the plant and recycled to the reforming and FT modules for steam production.

### BRIEF DESCRIPTION OF THE DRAWINGS

Figure 1 shows a block diagram of a GTL processing system.
Figure 2 shows a flow diagram for the gas conditioning unit, where the associated/natural gas is processed to eliminate sulfur and condensables and compressed to the desired process operation pressure.
Figure 3 shows a flow diagram of the process, including the gas conditioning unit, the reforming module, the FT module and the product separation unit.
Figure 4 shows a view of the reforming module. It represents the vessel inside which the reactors and heat exchangers are located with all their flow inlets and outlet.
Figure 5 is a view of the FT module. It represents the vessel inside which the reactors and heat exchangers are located with all their flow inlets and outlets.
Figure 6 is a block diagram of the steam generation and management system. It shows the steam generation inside the reforming and FT vessels to maintain isothermal conditions and optimize heat transfer.
Figure 7 is a diagram of the electric and thermal generation system, used to start-up the process.

### DETAILED DESCRIPTION OF THE INVENTION

In the context of the present invention, the following terms have the meaning indicated below.

The term "natural gas" refers to a naturally occurring hydrocarbon gas mixture consisting primarily of methane, with up to 20% of other hydrocarbons as well as impurities in varying amounts such as carbon dioxide.

The term "associated gas" refers to natural gas found in oil fields (deposits rich in oil). Oil and natural gas are produced by the same geological fossil fuel process. As a consequence, oil and natural gas are often found together in oil fields.

The term "non-associated gas" refers to natural gas isolated in natural gas fields (deposits rich in natural gas).

The term "synthetic fuel" refers to any liquid fuel obtained from natural gas, coal or biomass by synthetic procedures.

The term "syngas" refers to a gas mixture that contains varying amounts of carbon monoxide and hydrogen.

The term "hydrocarbon" refers to purely hydrocarbon compounds, that is aliphatic compounds (e.g. alkane, alkene or alkyne), alicyclic compounds (e.g. cycloalkane, cycloalkylene), aromatic compounds, aliphatic- and alicyclic-susbtituted aromatic compounds, aromatic-substituted aliphatic compounds, aromatic-substituted alicyclic compounds, and the like. Examples can include methane, ethane, propane, cyclohexane, ethyl cyclohexane, ethyl benzene, etc.

The GTL processing system object of the present invention is **characterized in that** the microreactors and the heat exchangers of the system are micro-channel based devices.

The micro-channel based devices may refer to a heat exchanger or microreactors comprising one or more microchannels wherein a reaction process or heat transfer is conducted. The process may be a Fischer-Tropsch or steam reforming or partial oxidation reaction process or a heat exchange process.

The term "microreactor" must be understood as a metal structure longitudinally traversed by micrometric channels or microchannles, wherein the walls of said microchannels are coated or impregnated or filled with a catalyst. The arrangement of channels enables the crossing of different streams or simultaneity of independent reaction mechanisms.

Said microreactors are compacts, resistant to collisions and vibrations, adaptable to transport means, and integrable to the energy demands in remote or difficult-to-access locations.

The term "heat exchanger" refers to a structure comprising one or more microchannels having heat exchange fluid in it that provides heat and/or absorbs heat.

The term "micro-channel" refers to a channel having at least one internal dimension of height and width of up to about 10 mm, and in one embodiment up to about 5 mm. The microchannel may comprise at least one inlet and at least one outlet, wherein the at least one inlet is distinct from the at least one outlet. The microchannel may not be merely an orifice. The microchannel may have a cross section having a shape, for example, a square, rectangle, circle, semi-circle, trapezoid, etc. The shape and/or size of the cross section of the microchannel may vary over its length.

The GTL processing system object of the present invention includes reforming module and a Fischer-Tropsch module.

### Reforming module

The reforming module comprises: a) at least an autothermal modified reforming microreactor where steam reforming and partial oxidation of methane are carried out together, b) at least a catalytic combustion microreactor, c) at least a first heat exchanger located at the inlet of the autothermal modified reforming microreactor, and d) at least a second heat exchanger located at the outlet of the autothermal modified reforming microreactor.

By "autothermal modified reforming microreactor" is understood a reforming microreactor for conducting a steam reforming reaction, wherein said microreactor has been modified so as to also conduct a partial oxidation reaction.

In the autothermal modified reforming microreactor (a), methane is converted into hydrogen and carbon monoxide by means of a steam reforming (SMR) reaction and catalytic partial oxidation (POX) to produce a syngas.

The term "steam reforming" or "SMR" refers to the reaction of methane with water vapour to form syngas. The reaction can be described in the following reaction:

CH₄ + H₂O → CO + 3H₂

The catalysts used for carrying out the steam reforming reaction are deposited on the walls of the microchannels traversing the microreactor. Said catalysts are active and stable for the mechanism of the reactions taking place.

The catalyst is deposited onto the walls of the microchannels of the microreactor by immersing the microreactor in a suspension containing the catalyst, a process which is commonly referred to as washcoating. Once the suspension is adjusted, the main characteristics of the slurry catalyst such as adhered load, homogeneity and adhesion are optimized.

The term "slurry" refers to a suspension of a solid in a liquid.

In a particular embodiment, the catalyst is deposited in the microreactor by filling the microchannels with the catalyst.

In a particular embodiment, the autothermal modified steam reforming microreactor comprises a catalyst selected from nickel based catalyst, perovskite, nickel/aluminium spinel and noble metal based catalyst supported on an inorganic oxide.

Nickel based catalyst are the most common for methane reforming processes. Catalysts like perovskites and nickel/aluminium spinel are reported in literature as most efficient. Noble metal based catalysts have also been developed in the last years. These catalysts are usually platinum and rhodium based catalysts supported in alumina or magnesia type oxides and provides more stability under process conditions.

The steam reforming reaction produces a syngas with a H₂/CO ratio between 3 and 5. However, the Fischer-Tropsch (FT) synthesis requires a H₂/CO of approximately 2 to favour the reaction that converts syngas into fuel-sized hydrocarbons (C₉-C₂₃). Therefore, the efficiency and selectivity of the FT synthesis can be enhanced if favourable H₂/CO ratio in the reforming stage can be achivied.

In order to reduce the the H₂/CO ratio in the syngas, a partial oxidation (POX) reaction is performed together with the steam reforming reaction. Said reaction reduces the referred ratio to values between 1.5 and 2.5, more preferably to approximately 2.

The term "partial oxidation" or "POX" refers to the reaction of methane with oxygen to form syngas. The reaction can be described in the following reaction:

CH₄ + 1/2O₂ → CO + 2H₂

The catalysts used for carrying out the partial oxidation process are deposited onto the walls of the microchannels traversing the microreactors. Said catalysts are active and stable for the mechanism of the reactions taking place.

The catalysts are deposited on the walls of the microchannels of the microreactor by immersing the microreactor in a suspension containing the catalyst. Once the suspension is adjusted, the main characteristics of the catalyst slurry such as adhesion, homogeneity and adhered load are optimized.

In a particular embodiment, the catalyst is deposited in the microreactor by filling the microchannels with the catalyst.

Preferably, the catalyst used in the partial oxidation reaction are also noble metal based materials, such as a combination of palladium, rhodium and platinum supported onto alumina or mixtures of alumina with ceria or zirconia seems to be the most stable and active catalyst.

The steam reforming reaction is endothermic and therefore requires the supply of heat. The heat demanded by this reaction is generated also by the catalytic partial oxidation of methane inside the channels where the steam reforming reaction occur and, optionally, by a catalytic combustion microreactor which generates sufficient heat to carry out the steam reforming reaction in optimal conditions.

Thus, by partial oxidation of methane, part of heat demanded by SMR reaction is supply by the reaction mentioned above. The exit gas from the SMR reaction is mixed with high pressure air from an air compressor to perform the POX reaction.

In a particular embodiment, instead of air the exit gas of the SMR reaction is mixed with high pressure enriched air.

In a particular embodiment, instead of air the exit gas of the SMR reaction is mixed with high pressure oxygen.

In a particular embodiment, partial oxidation of methane supply excess of heat to "SMR" reaction, so the catalytic combustion microreactor acts as heat exchanger.

In another particular embodiment, part of the heat needed to drive the reaction of SMR is provided by the combustion of an inflammable gas such as methane or hydrogen performed in the catalytic combustor microreactor. The combustion reactions which take place in the combustor or combustion microreactor are the following:

CH₄ + 2O₂ → CO₂ + 2H₂O

2H₂ + O₂ → 2H₂O

CO + ½ O₂ → CO₂

The combustor directly exchanges the heat generated in these exothermic reactions with the autothermal modified reforming microreactor. The combustion is controlled by the temperature in the autothermal modified reforming microreactor according to the amount of combustion agent introduced therein.

The choice of a catalytic combustor is due to the fact that it involves a smaller volume and requires a lower oxygen excess, thus preventing a conventional flame combustion which can entail safety problems. It furthermore enables a better heat transfer and produces a smaller amount of unburned substances.

The catalyst used in the combustion reaction must be resistant to deactivation which can be generated by the presence of large amounts of water vapor in the gas stream, in addition to be being capable of carrying out the complete combustion of the unburned substances.

In a particular embodiment, combustion catalysts are platinum based formulations based on alumina or zirconia supports due to the high poisoning resistance of this noble metal. Usually this catalyst bears some promoters like sodium, lithium, potasium, etc, in order to achieve 100% combustion conversion and support stabilizers like lanthanum, manganese in order to avoid catalyst deactivation due to sintering.

In a particular embodiment, the catalyst is deposited onto the walls of microreactor by washcoating process.

In a particular embodiment, the catalyst is deposited in the microreactor by filling the microchannels with the catalyst.

Thus, the reforming module comprises a steam reforming reaction and partial oxidation reaction, to form syngas according to the following reaction:

CH₄ + 1/2O₂ +H₂O→ 2H₂ + CO + H₂O

In a particular embodiment, both the steam reforming reaction, the partial oxidation and the combustion reaction take place in the same block, thus improving the efficiency of the heat transfer.

The reforming module further comprises at least a heat exchanger located at the inlet of the autothermal modified reforming microreactor, which allows pre-heating the natural gas or associated gas to a temperature suitable to be treated in the autothermal modified reforming microreactor.

Preferably, the natural gas is pre-heated before entering the autothermal modified reforming microreactor from about 800 to about 900°C.

The mixture of carbon monoxide and hydrogen emerging from the autothermal modified reforming microreactor should be cooled before entering in the Fischer-Tropsch module. Therefore, the reforming module also comprises a second heat exchanger located at the outlet of the autothermal modified reforming microreactor.

Unlike the first heat exchanger and microreactors of the reforming module, the second heat exchanger has open channels through which the water entering the vessel flows naturally and starts converting into steam due to heat transfer.

The term "open channel" refers to a channel with a gap of at least 0.1 mm that extends all the way through the channel such that a fluid can flow through the channel without encountering a barrier to flow.

In a particular embodiment, the exchanged heat is used to generate steam.

The natural gas to be reformed in the reforming module consists of methane but it can also contain up to 20% of higher hydrocarbons and other impurities such as sulfur. Thus, in a preferred embodiment, prior to undergo the reforming process, all minority materials such as higher molecular weight hydrocarbons and sulfur are removed to avoid catalyst deactivation, lower efficiencies and possible blocking in the micro-channels.

Accordingly, in a particular embodiment the reforming module further comprises a pre-reforming block which comprises: a) at least a pre-reforming adiabatic microreactor wherein C₂-C₁₁ hydrocarbons present in the natural gas are transformed into methane, and b) at least a heat exchanger which allows pre-heating the natural gas to a temperature suitable to be treated in the pre-reforming microreactor.

Preferably, the natural gas is pre-heated as defined above before entering the pre-reforming microreactor from about 400°C to about 500°C.

In a particular embodiment, the exchanged heat in the second heat exchanger located at the outlet of the autothermal modified reforming microreactor is used to to pre-heat the natural gas feed in the pre-reforming reactor.

In the pre-reforming adiabatic microreactor, the higher molecular weight hydrocarbons are then reduced by converting them into methane by thermal and catalytic cracking.

The term "cracking" refers to a process whereby heavy hydrocarbons are broken down into simpler molecules such as light hydrocarbons, by the breaking of carbon-carbon bonds.

The pre-reforming microreactor is adiabatic, i.e., no external heat is necessary for the reactions to occur.

In another particular embodiment, the GTL processing system further comprises a conditioning unit before the pre-reforming module, wherein said conditioning unit comprises a condensable extraction and desulphurization microreactor wherein natural gas is desulphurized and dehumidified. Preferably, sulfur is removed with either methanol or an amine solution, depending on the origin of the associated/natural gas and the necessities of the process, while humidity is eliminated by condensation techniques.

In particular embodiment, the sulphur is removed with either adequate adsorbents (microporous materiasl, zeolites,) and/or catalytic reactions depending on the origin of the associated/natural gas and the necessities of the process.

In a preferred embodiment, the sulfur content is reduced from about 0.1 ppm to about 10 ppb.

The natural gas, either purified after removal of sulfur and humidity, or without subjected to purification, can be compressed before entering in the reforming module.

Thus, in a particular embodiment, the GTL processing system further comprises a compressor located at the outlet of the condensable extraction and desulphuration microreactor. In a particular embodiment, the natural gas is compressed to about 30 bar.

However, depending on the natural gas nature, the compressor can be omitted because the feed stock already enters the process at the desired pressure.

### Fischer-Tropsch module

The syngas produced in the reforming module is introduced in the Fischer-Tropsch (FT) module. Said Fischer-Tropsch module comprises a) at least a FT microreactor, and b) at least a heat exchanger located at the inlet of the first FT microreactor

By Fischer-Tropsch (FT) is understood a reaction by which a mixture of carbon monoxide and hydrogen (syngas) react to produce hydrocarbons. Thus, in the FT microreactor, the mixture of hydrogen and carbon monoxide coming from the reforming module reacts to generate a mixture of hydrocarbons ((CH₂)ₙ) according to the following reaction:

nCO + 2nH₂ → (CH₂)ₙ n + nH₂O

wherein n may be any number, for example from 1 to about 20.

This reaction also produces, in a minor extend, water, alcohols and a tail gas.

The term "tail gas" refers to a gaseous product having a boiling point below about 30°C at about atmospheric pressure.

Tail gas is typically comprised of unconverted syngas and uncondensed products such as CO, H₂, CO₂, gaseous hydrocarbons (C1-C5), H₂O, N₂, Ar and, depending on the catalyst, other compounds and hydrocarbons.

This reaction is exothermic and it is usually conducted in presence of catalyst.

In a particular embodiment, the catalyst is a transition metal based catalyst, optionally containing a catalyst promoter.

A variety of catalyst in the form of an active metal phase can be used for the FT process, such as cobalt, iron and ruthenium based catalyst. Cobalt-based catalysts are highly active, although iron may be more suitable for low-hydrogen-content synthesis gases such as those derived from coal or biomass due to its promotion of the water-gas-shift reaction.

In addition to the active metal phase, the catalysts typically contain a number of "promoters," such as, rhodium, ruthenium, platinum, even including potassium and copper.

Active metal phases and promoters are supported on high-surface-area binders/supports such as silica, alumina, or zeolites.

The FT module also comprises a third heat exchanger located at the inlet of the FT microreactor and pre-heats the syngas to a temperatue suitable to be treated in the FT microreactor.

Preferably, the syngas is pre-heated to about 220°C before entering the FT microreactor.

In a particular embodiment, the FT module further comprises a high pressurized heated separation vessel located at the outlet of the FT microreactor, wherein wax fraction hydrocarbons are separated from the liquid fraction.

Furthermore, the FT module may also comprise a low pressurized heated separation vessel located at the outlet of the high pressurized heated separation vessel, wherein the liquid fraction is separated in hydrocarbons, water and tail gas.

Even more particularly, the FT module further comprises a distillation column located at the outlet of the low pressurized heated separation vessel to further separate the resulting liquid fraction into different synthetic fuels.

In a particular embodiment, the FT module comprises at least two FT microreactors. Depending on the FT module operation strategy, the at least two FT microreactors are positioned in serie or in parallel.

When the at least two FT microreactors are position in parallel, the FT module comprises a heat exchanger located at the inlet of each FT microreactor.

In this case, a high pressurized heated separation vessel, a low pressurized heated separation vessel and a distillation column as defined above can also be included at the outlet of each FT microreactor.

When the at least two FT microreactors are position in serie, the FT module comprises a heat exchanger located at the inlet of the first FT microreactor. In this case, a high pressurized heated separation vessel, a low pressurized heated separation vessel and a distillation column as defined above can also be included at the outlet of the first FT microreactor.

The GTL processing system object of the present invention is further **characterized in that** the reforming module and the FT module are laid out separately and each of these modules are located in vessels, to avoid heat transfer and leaks towards outside.

The term "vessel" refers to a closed container designed to hold gases or liquids at a pressure substantially different from the ambient pressure.

This layout of the reforming and FT modules introduced in vessels improves thermal efficiency of the process and the energy and mass-transference between the reactors as conventional insulation is limited. Therefore, it avoids hot spots that could affect the selectivity of the process while reducing thermal and fluidynamic losses. It also minimizes the piping necessities between the different units, improving the thermal efficiency of the process and making maintaince more accessible. They can be easily removed whenever necessary through a removal flange

In particular embodiment, the reforming module and the FT module are laid out separately, and each of these modules is located in vessel.

In another particular embodiment, the GTL processing system of the invention further comprises a H₂ membrane separator to advantageously adjust the H₂/CO ratio to 2. Said membrane is located between the reforming module and the FT module. The separated H₂ can be recycled for combustion in the reforming stage.

In another embodiment, the GTL processing system further comprises a bed catalyst guard located between the reforming module and the FT module, and after H₂ membrane separator mentioned above, when this is present in the system. Said catalyst guard protects the FT catalyst from fouling and poisoning. No reaction takes place within the bed and the main FT catalyst's life is substantially increased, improving the efficiency of the process and reducing costs for its replacement.

In another particular embodiment, the invention relates to a GTL processing system as defined above wherein no compression devices are located between the reforming module and the FT module.

In another particular embodiment, the GTL processing system further comprises an expander, located at the outlet of the FT module, to reduce the pressure of the resulting fuel stream exiting the FT module.

In another particular embodiment, the GTL processing system of the invention further comprises a separator located at the outlet of the expander mentioned above in order to separate the depressurized fuel stream into synthetic fuel, tail gas and water.

In a particular embodiment, the GTL processing system as defined above further includes an electric and thermal generation start-up/heater unit which comprises a furnace, a start-up boiler and a gas turbine.

Part of the natural gas used for the production of synthetic fuel is fed to the furnace. The resulting flue gases exiting the furnace are fed to the start-up boiler to generate steam. The resulting steam exiting the star-up boiler is fed to the process and to a gas turbine to generate electricity. On the other hand, the corresponding generated heat is used to pre-heat the reforming module. The hot flue gas that leaves the gas turbine is used for heat exchange with water to generate steam. The resulting hot natural gas is sent to pre-heat the reforming reactor and in particular embodiment oxygen is added to burn the hot natural gas inside the microchannels to reach the target temperature. The resulting steam pre-heat the FT module before reaching normal operating conditions. In addition to the hot flue gases, the start-up boiler and the gas turbine generates electric and thermal energy that provides for the plant's needs, resulting in economically efficient GTL plants for offshore applications.

In a particular embodiment, the GTL processing system as defined above, the star-up heater system remains in operation to heat the natural/associated gas throughout the period of operation of GTL process.

### Process

Another aspect of the present invention relates to a process to convert associated and non-associated natural gas into synthetic fuel comprissing: a) a steam reforming reaction and a partial oxidation reaction wherein methane is catalytically converted into hydrogen and carbon monoxide; wherein both the steam reforming and the partial oxidation reactions are conducted together; and b) a Fischer-Tropsch synthesis wherein the hydrogen and carbon monoxide react to generate a fuel stream comprising a mixture of hydrocarbons and in a minor extend, waxes, water, alcohols and tail gases; wherein said stages are carried out using the GTL processing system as defined above.

In a particular embodiment, the process of the invention further comprises a separation step, wherein the outlet stream obtained after the FT synthesis is separated at different pressurized vessels, into waxes, hydrocarbons, water, alcohols and tail gas. After that, the liquid fractions are further separated in a distillation column.

Preferably, the outlet stream obtained after the FT synthesis is separated in a high pressurized heated separation vessel into a wax fraction and a liquid fraction, wherein said liquid fraction comprises hydrocarbons, water and, in minor extend, alcohols and tail gas). The liquid fraction is further separated in a low pressurized heated separatorion vessel into a tail gas and a mixture of hydrocarbons and water.

Particularly, the tail gas from the low pressurized separation vessel is partially recycled back to the reforming module and partially taken to provide the heat necessary to the reforming reactions.

Recycling the tail gas back to the reforming module can then convert these hydrocarbons into syngas, thus increasing the overall yield of the desired FT fuel-sized hydrocarbons (C₉-C₂₃). Moreover, it is advantageous to remove the uncondensed products with the corresponding membrane separator so as to increase the efficiency of the process and to avoid the over-sizing of all the equipment. The rest of the tail gas can enter the reforming module for combustion with the H₂ separated in the membrane for H₂/CO adjustment in the syngas to generate the heat necessary for the reforming reactions.

In another particular embodiment, the separation step as defined above further includes a distillation step through a distillation column to further separate the resulting liquid fraction into different synthetic fuels.

The process of the invention is further **characterized in that** it is operated at a constant pressure.

In a more preferred embodiment, said process is operated at a constant pressure of about 30 bar.

Operating the process at a contant pressure involves removing the compression devices between the reforming module and the FT module that conventional GTL systems include, reducing the thermal costs and improving the integration of both stages.

In a particular embodiment, the process of the invention further comprises a step wherein the fuel stream exiting the FT module is depressurized. This step is tipically performed in a turbo expander.

In another particular embodiment, the process of the invention further comprises a step wherein the fuel stream exiting the FT module, once depressurized, is separated into synthetic fuel (C₆-C₂₃), tail gas and water.

In a particular embodiment, the invention relates to a process as defined above which further comprises first subjecting the natural gas entering the catalytic reforming block to a pre-reforming reaction to transform C₂-C₁₁ hydrocarbons present in the natural gas in methane and in the recycled tail gas.

In a particular embodiment, the invention relates to a process as defined above which further comprises first desulphurize and dehumidified the natural gas entering the reforming module.

In a particular embodiment, the invention relates to a process as defined above further **characterized in that** said process is stated-up by feeding part of the natural gas to a furnace, start-up boiler and a gas turbine as defined above, wherein:
a.the resulting flue gases exiting the furnace are used to feed the start-up boiler to generated steam;
b.the resulting steam that leaves the start-up boiler is used to feed the gas turbine to generate electricity.
c.the resulting heat generated in the furnace is used to pre-heat the reforming module;
d.the resulting flue gases exiting the start-up boiler is used to heat the FT module.

### Embodiment of the Invention

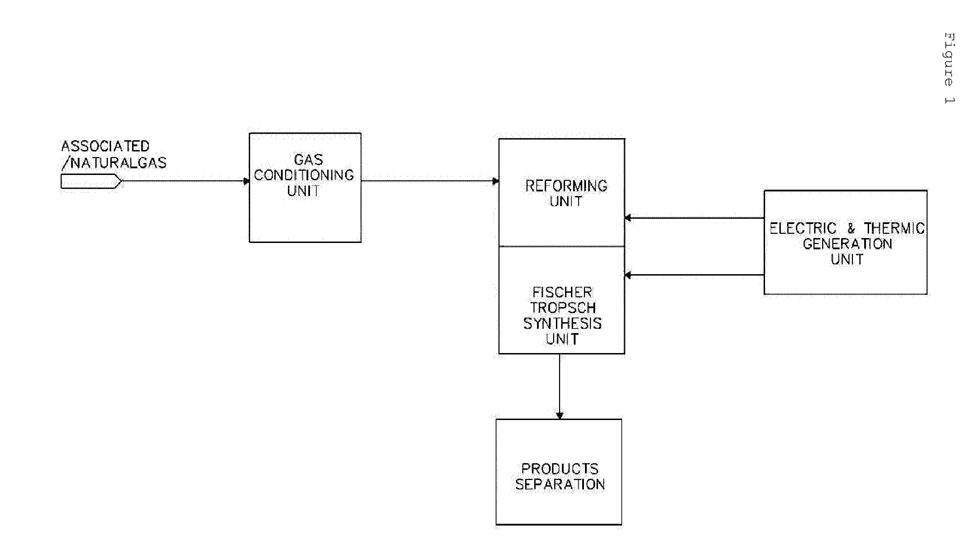

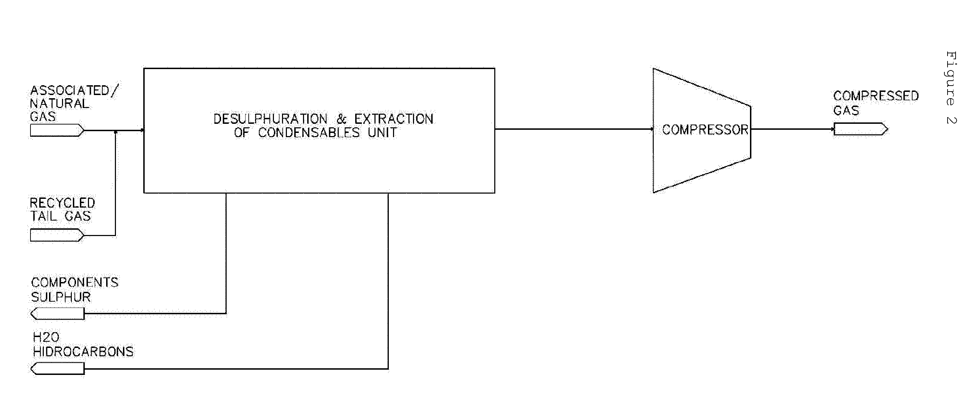

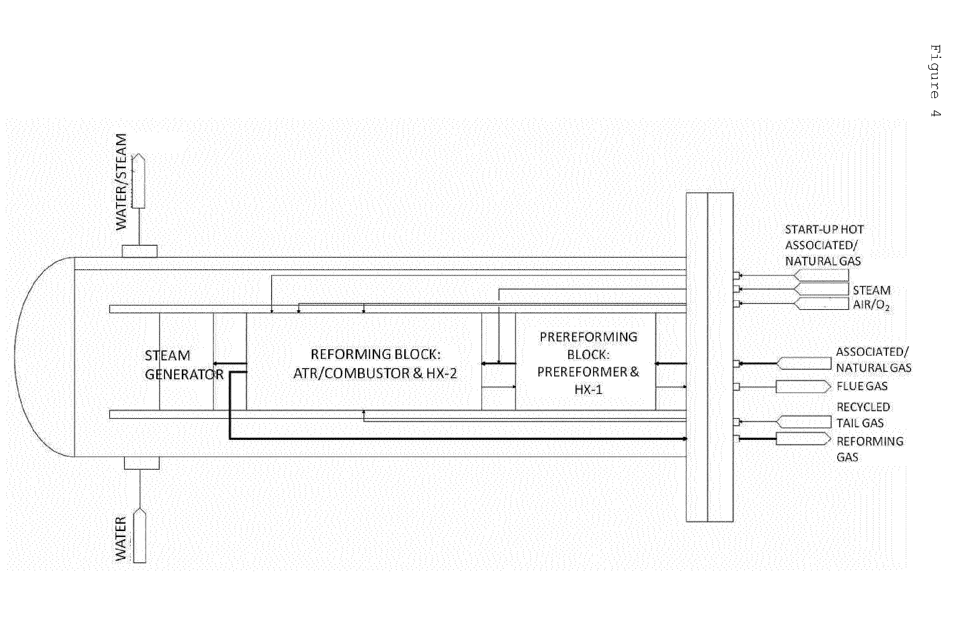

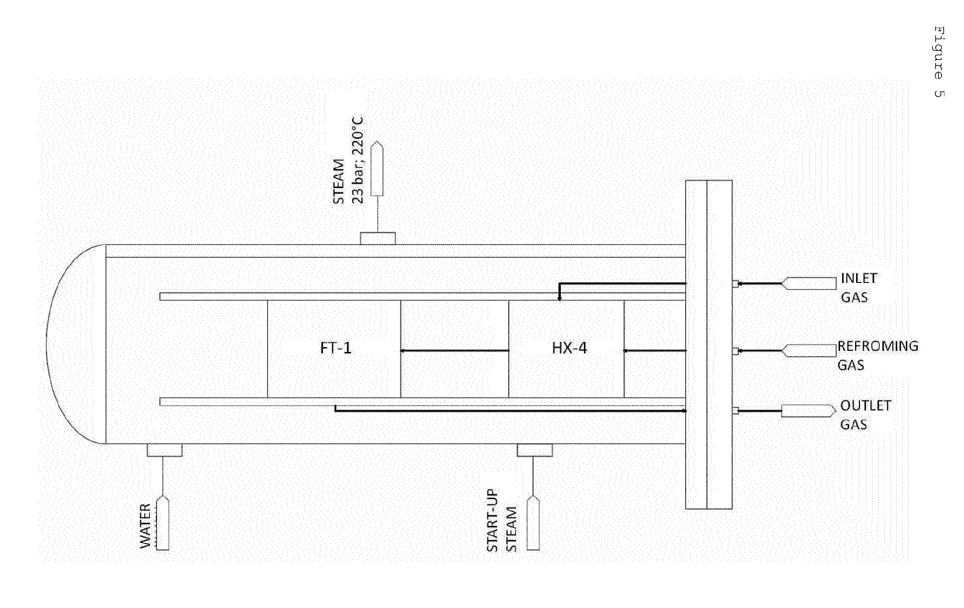

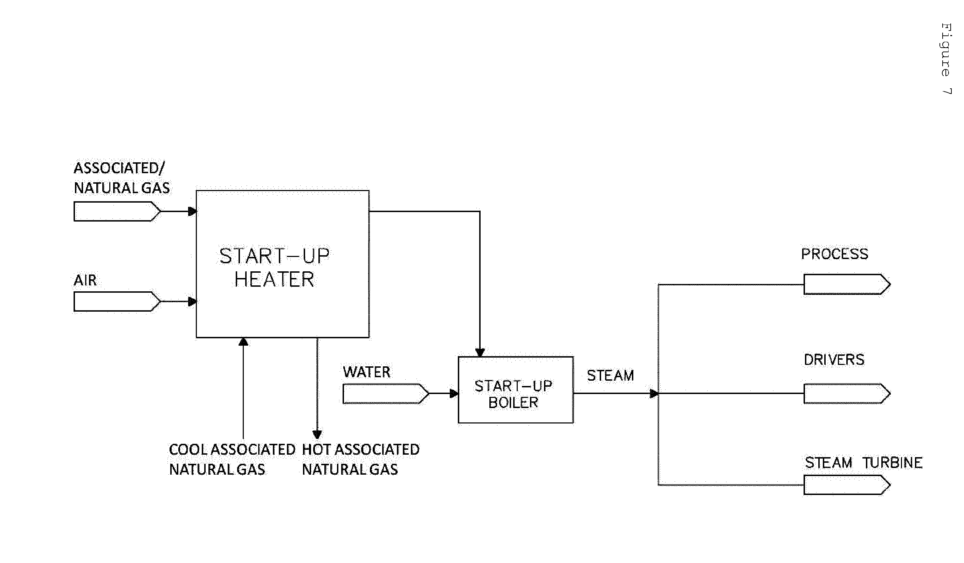

This particular embodiment describes a GTL processing system for the production of synthetic fuel, which is configured in compact units as shown in Figure 1. Said GTL processing system comprises:
1. a gas conditioning unit **(****Figure 2****)** wherein the undesirable components of the associated/natural gas, such as sulfur and condensables, are eliminated;
2. a reforming module **(****Figure 4****),** wherein the associated/natural gas is converted into syngas;
3. a FT module **(****Figure 5****),** wherein the syngas obtained in the reforming module is transformed in diesel fraction hydrocarbons (C₉-C₂₃), along with other fractions such as naphta (C₆-C₈), and in minor extension waxes (>C₂₃) and tail gases (C₁-C₅ and other gases);
4. a separation unit, wherein the different fractions of the hydrocarbons obtained in the FT module are separated; and
5. an electric and thermal generation unit **(****Figure 7****)** to allow the start-up of the process.

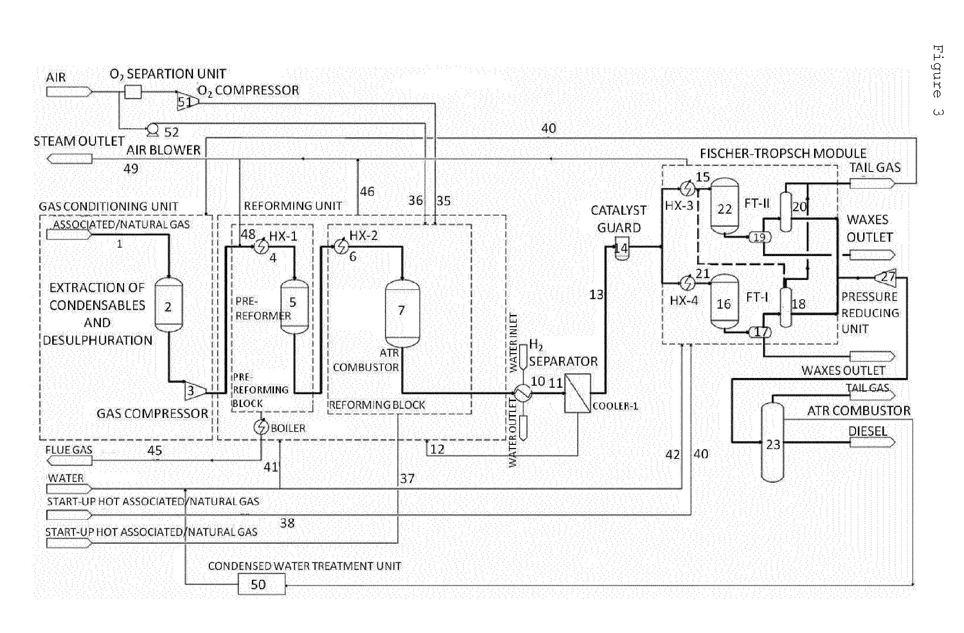

A process for the production of synthetic fuel using the GTL processing system described in this particular embodiment is shown in Figure 3 and described below.

### • Gas Conditioning Unit

Associated/natural gas enters the gas conditioning unit where the undesirable components such as sulfur and condensables are eliminated. The associated/natural gas feed **(1),** which consists primarily of methane with a small percentage of higher hydrocarbons C₂ to C₁₁ plus condensables, is fed to a condensable extraction unit plus a desulphurization reactor **(2)** where the sulfur content in the gas is reduced from about 0,1 ppm to about 10 ppb.

Then, the gas is taken to a compressor **(3),** exiting at 30 bar. Depending on the origin of the natural gas, this compressor can be omitted because the feedstock already enters the process at the desired pressure.

### • Reforming Module

The compressed gas enters, then, the reforming module which is divided in two separate blocks: the pre-reforming block and the reforming block. The reforming module includes also heat exchangers necessary to achieve the adequate temperatures in the microreactors.

In the pre-reforming block, the compressed gas is pre-heated to 400-500°C with steam **(48)** in a heat exchanger (HX-1, **4)** before entering the pre-reformer **(5).** In the pre-reformer the higher molecular weight hydrocarbons are reduced by converting them into methane by thermal and catalytic cracking. The pre-reformer is an adiabatic reactor thus no external heat is necessary for the reactions to take place.

Then, a feed gas of primarily methane and unreacted steam enters the reforming block. The reforming block, built as an individual unit or module, includes steam reforming and autothermal reforming and the combustion system from which the endothermic reforming reaction obtains its energy.

Said feed gas is heated to 800-900°C in a heat exchanger (HX-2, **6)** using the hot exhaust gas from catalytic combustion of the H₂ **(12)** separated in the H₂ membrane **(11)** and part of the tail gas separated from the last product separator **(23).** The gas/steam/oxygen mixture enters the autothermal modified reforming microreactor **(7)** to convert most of the methane into syngas, obtaining a H₂/CO ratio about 2. The heat for this reaction, part is provided by the heat obtained from the catalytic combustion of the H₂ **(12)** separated in the H₂ membrane **(11)** and part of the tail gas **(31)** separated from the FT module **(29)** with low pressure air **(36)** from air blower **(52).** The other part of the heat is provided by the catalytic combustion of the methane inside the microchannels.

The gas/steam mixture is then mixed with high pressure oxygen **(35)** exiting an air compressor **(51)** to accomplish the partial oxidation reaction.

A mixture of carbon monoxide and hydrogen at 850°C emerges from the autothermal modified reforming reactor reformer **(7)** and is quenched to 250°C by passing it through a steam-raising heat exchanger for process steam generation. The water enters in the vessel flowing naturally through the open channels of this heat exchanger and starts converting into steam due to heat transfer.

The syngas is further cooled in a heat exchanger **(10)** with cooling water to about 25°C, so the excess water condenses. Removing the water from the gas prior to the Fischer-Tropsch (FT) is advantageous to favour the equilibrium of the reactions taking place to generate hydrocarbon fractions and to increase the FT catalyst's life.

The syngas traverses then an H₂ membrane separator **(11)** to adjust the H₂/CO ratio to 2, ideal for the FT synthesis, and to provide necessary heat to the reforming microreactor by combustion of the separated H₂ **(12).** Afterwards, the gas mixture **(13)** is fed to a catalyst guard **(14)** where poisons are withheld by the catalyst bed, ensuring longer life for the FT catalyst.

### • Fischer-Tropsch Module and Separation unit

The cleaned syngas mixture enters the FT module which has two FT microreactors (FT-I, **16;** FT-II, **22)** and is pre-heated to 220°C in the heat exchangers (HX-3, **15;** HX-4, **21)** before entering the FT microreactors. Depending on the the FT module operation strategy, the different microreactors operate in serial or parallel mode.

In parallel mode, the exit gas of FT-I **(16)** and FT-II **(22)** is firstly taken to high heat pressurized separation vessels **(17, 19),** where the wax fraction hydrocarbons (>C₂₃) are separated. The two wax outlets are joined and removed for use.

The temperature is maintained at 220°C. The rest is then sent to low heat pressurized separation vessels **(18, 20),** where the liquid fraction hydrocarbons are separated from the tail gas. The two liquid fractions are mixed and are taken to a distillation column **(23)** to obtain the different fractions of the liquid.

In parallel mode, all the tail gas **(40)** is recycled back to the process. The rest of the tail gas is taken to the reforming module to provide necessary heat to the reforming microreactor by combustion.

In serial mode, the exit gas of FT-I **(16)** is firstly taken to a high heat pressurized vessel separator **(17),** where the wax fraction hydrocarbons (>C₂₃) are separated. The temperature is maintained at 220°C. The rest is then sent to low heat pressurized separation vessel **(18)** where the liquid fraction hydrocarbons are separated. The tail gas **(dashed line)** is then sent to FT microreactor FT-II **(22).**

In serial mode, only the tail gas from the FT-II **(22)** is recycled back to the process **(40).** The rest of the tail gas is taken to the reforming module to provide necessary heat to the reforming microreactor by combustion.

The outlet stream from the FT module passes through a turbo-expander **(27)** to reduce the process pressure for future flash separation. The energy obtained in this expansion is used in the compression of the associated/natural gas.

The mixture of hydrocarbons is finally separated in a flash separator **(23)** into different fractions: synthetic fuel (C₆-C₂₃), tail gas (C₁-C₅ and other remaining gases) and water.

All the water condensed throughout the process is passed to a water treatment unit **(50)** where it undergoes typical water treatment steps in order to remove the contaminants and produce clean water for use in the catalytic reforming module and FT module.

### • Electric and Thermal Generator Unit

The start-up flue gases exiting the gas turbine (refer to **Figure 7****)** are used for heat exchanging with water to generate steam to start-up the FT module.

The resulting start-up hot associated natural gas **(37)** is used to pre-heat the reforming block **(7)** of the reforming module before starting to operate with associated/natural gas **(1).**

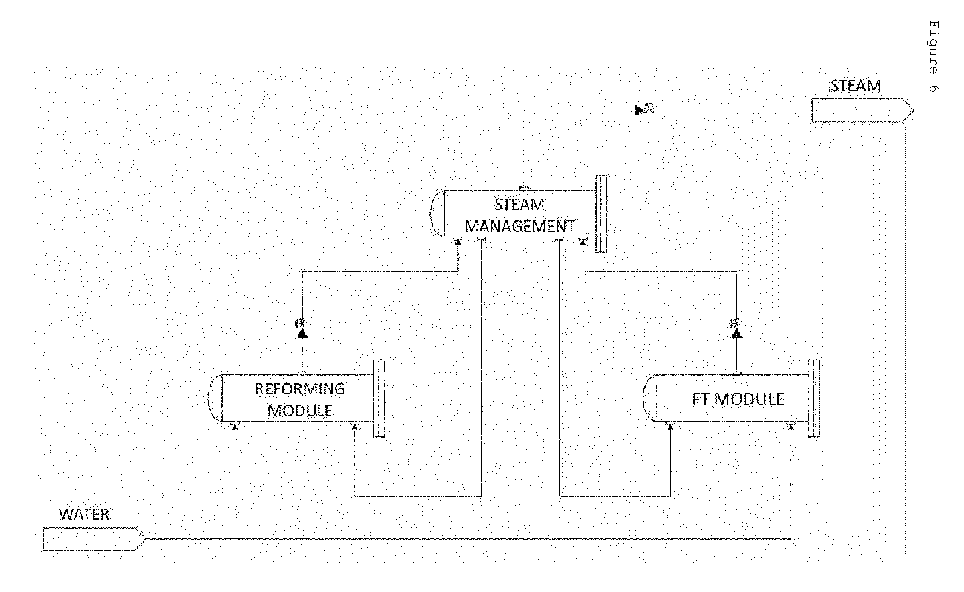

In addition, the resulting start-up steam **(38)** is used to heat FT vessels through the open channels of the inside devices. As shown in **Figure 6** and following the process in **Figure 3****,** water enters both the reforming module and the FT module, converting into steam **(41** and **42)** in both vessels due to heat exchange between the different units.

The vessels need a management drum that collects the steam generated in both modules. This last drum evacuates a quantity of steam at a pressure, determined by the necessities of the ATR. An excess of steam remains to be taken either to district heating or to electric generation in a gas turbine.

## Claims

1. A Gas-to-Liquid processing system suitable for converting associated and non-associated natural gas into synthetic fuel, comprising:
a) a reforming module comprising:
- at least an autothermal modified reforming microreactor wherein methane is catalytically converted into hydrogen and carbon monoxide by a steam reforming reaction and a partial oxidation reaction;
- at least a catalytic combustion microreactor which provides the thermal energy required by the autothermal modified reforming microreactor, or alternatively, acts as a heat exchanger;
- at least a first heat exchanger located at the inlet of the autothermal modified reforming microreactor, which allows pre-heating the natural gas to a temperature suitable to be treated in the autothermal modified reforming microreactor; and
- at least a second heat exchanger provided with open channels, wherein said second heat exchanger is located at the outlet of the autothermal modified reforming microreactor;
b) a Fischer-Tropsch module comprising:
- at least a Fischer-Tropsch microreactor, wherein hydrogen and carbon monoxide react to generate hydrocarbons;
- at least a heat exchanger located in the inlet of the first Fischer-Tropsch microreactor, which allows pre-heating the mixture of hydrogen and carbon monoxide obtained in the reforming module to a temperature suitable to be treated in the first Fischer-Tropsch microreactor;
**characterized in that** the reforming module and the Fischer-Tropsch module are laid out separately, and each of these modules are located in a vessel; and further **characterized in that** the microreactors and the heat exchangers of the system are micro-channel based devices.

2. The Gas-to-Liquid processing system according to claim 1, wherein no compression devices are located between the reforming module and the Fischer-Tropsch module.

3. The Gas-to-Liquid processing system according to any of claims 1 and 2, further comprising a hydrogen membrane separator located between the reforming module and the Fischer-Tropsch module.

4. The Gas-to-Liquid processing system according to any of claims 1 to 3, further comprising a catalyst guard located between the reforming module and the Fischer-Tropsch module.

5. The Gas-to-Liquid processing system according to any of claims 1 to 4, wherein the reforming module further comprises a pre-reforming block comprising:
a) at least a pre-reforming adiabatic microreactor wherein C₂-C₁₁ hydrocarbons present in the natural gas are transformed into methane;
b) at least a heat exchanger which allows pre-heating the natural gas to a temperature suitable to be treated in the pre-reforming microreactor.

6. The Gas-to-Liquid processing system according to any of claims 1 to 5, further comprising a conditioning unit before the reforming module, wherein said conditioning unit comprises a condensable extraction and desulphurization microreactor wherein natural gas is desulphurized and dehumidified.

7. The Gas-to-Liquid processing system according to claim 6, wherein the conditioning unit further comprises a compressor at the outlet of the condensable extraction and desulphurization microreactor to adjust the pressure of the feed gas to the reforming module.

8. The Gas-to-Liquid processing system according to any claims 1 to 7, wherein the Fischer-Tropsch module comprises at least two Fischer-Tropsch microreactors.

9. The Gas-to-Liquid processing system according to any claims 1 to 8, further comprisisng an electric and thermal generation start-up/heater unit which comprises a furnace, a start-up boiler and a gas turbine.

10. A process to convert associated and non-associated natural gas into synthetic fuel, comprising:
a) a steam reforming reaction and a partial oxidation reaction, wherein methane is catalytically converted into hydrogen and carbon monoxide, wherein both the steam reforming and the partial oxidation reactions are conducted together; and
b) a Fischer-Tropsch synthesis wherein the hydrogen and carbon monoxide react to generate a fuel stream;
**characterized in that** said stages are carried out using the Gas-to-Liquid processing system as defined in any of claims 1 to 9, and wherein the reforming module and the Fischer-Tropsch module operate at the same pressure.

11. The process according to claim 10, which further comprises first subjecting the natural gas to a pre-reforming reaction to transform C₂-C₁₁ hydrocarbons present in the natural gas in methane.

12. The process according to any of claims 10 and 11, wherein the natural gas is previously desulphurized and dehumidified.

13. The process according to any of claims 10 to 12, which is started-up by feeding part of the natural gas to a furnace, a start-up boiler and a gas turbine as defined in claim 9, wherein:
a.the resulting flue gases exiting the furnace are used to feed the start-up boiler to produce steam;
b.the resulting steam that leaves the start-up boiler is used to feed the gas turbine to generate electricity;
c.the resulting heat generated in the furnace is used to pre-heat the reforming module;
d.the resulting flue gases exiting the start-up boiler is used to heat the Fischer-Tropsch module.

14. The process according to any of claims 10 to 13, further comprising a step wherein the fuel stream exiting the FT module is depressurized.

15. The process according to any of claims 10 to 14, further comprising a step wherein the fuel stream exiting the FT module is separated into synthetic fuel (C₆-C₂₃), tail gas and water.
